# EUROPÄISCHE PATENTSCHRIFT

(11) **EP 1 377 765 B1**
(45) Veröffentlichungstag und Bekanntmachung des Hinweises auf die Patenterteilung: **12.10.2005**
(21) Anmeldenummer: 02732502.6
(22) Anmeldetag: 20.03.2002
(51) Int. Cl.: F16H 61/00, G01P 3/487, H02K 7/116

(54) **GETRIEBE, INSBESONDERE SCHNECKENGETRIEBE**
DRIVING GEAR, ESPECIALLY WORM GEAR
ENGRENAGE, NOTAMMENT ENGRENAGE A VIS SANS FIN

(30) Priorität: 12.04.2001 DE 10118387
(43) Veröffentlichungstag der Anmeldung: 07.01.2004
(73) Patentinhaber: Valeo Motoren und Aktuatoren GmbH, 74321 Bietigheim-Bissingen (DE)
(72) Erfinder: BRUHN, Rainer, 74379 Ingersheim (DE)
(74) Vertreter: Jahn, Wolf-Diethart
(86) Internationale Anmeldenummer: PCT/EP2002/003061
(87) Internationale Veröffentlichungsnummer: WO 2002/084151

(56) Entgegenhaltungen:
- EP-A- 0 474 904
- DE-A- 4 019 787
- DE-A- 4 233 156
- DE-A- 4 420 692
- US-A- 5 331 257
- PATENT ABSTRACTS OF JAPAN vol. 2000, no. 26, 1. Juli 2002 (2002-07-01) -& JP 2001 251808 A (ASMO CO LTD), 14. September 2001 (2001-09-14)

## Beschreibung

Die Erfindung betrifft ein Getriebe, insbesondere ein Schneckengetriebe, gemäß oberbegriff von Anspruch 1 sowie eine elektrische Antriebseinheit mit einem derartigen Getriebe.

Ein derartiges, gattungsbildendes Getriebe ist aus der DE 40 19 787 A1 bekannt geworden. Derartige Getriebe finden beispielsweise in einer Elektromotor-Getriebekombination für Scheibenwischanlagen, Fensterheber, Schiebedächer od.dgl. Anwendung.

Um Informationen zum Drehwinkel bzw. zur Drehwinkelgeschwindigkeit zu erhalten, weisen derartige Getriebe an der entsprechenden Welle ein Polrad mit einem die vom Polrad erzeugten magnetischen Signale erfassenden Hallsensor auf.

Bei dem bekannten Stand der Technik ist der Hallsensor hierfür neben einer Steuer- und Regelelektronik auf einer parallel zur Mittelachse der Motor-Ankerwelle in das Getriebegehäuse einschiebbaren Platine angeordnet. Die Platine wird durch einen Deckel im Gehäuse festgesetzt, der mit einer Stirnseite der Platine verbunden ist und an dem ein Strom- oder Signalstecker vorgesehen ist. Das Vorsehen des Steckers an dem Deckel erfordert einen erhöhten Montageaufwand und ist somit kostenintensiv. Außerdem kann es vorkommen, dass beim Aufstecken des Gegensteckers bei den erforderlichen hohen Steckerkräften die Steckverbindung derart beschädigt wird, dass die elektrische Verbindung zu Platine unterbrochen wird.

Der vorliegenden Erfindung liegt deshalb die Aufgabe zugrunde, die Steckverbindung montagegünstiger zu gestalten und die mechanische Widerstandsfähigkeit der Kontaktierungseinrichtung zu erhöhen.

Diese Aufgabe wird bei einem Getriebe der eingangs beschriebenen Art erfindungsgemäß dadurch gelöst, dass an der Platine Kontaktierungsmittel zum Zusammenwirken mit einem Steckerelement vorhanden sind und dass die Kontaktierungsmittel auf der der Kontaktierungsrichtung bzw. dem Steckerelement abgewandten Seite an dem Getriebegehäuse abgestützt sind. Die Kontaktierungsmittel können beispielsweise Kontaktstifte oder dergleichen sein. Auf diese Art und Weise können die vom Hallsensor erfassten Signale über ein Kabel mit einem Steckerelement an beispielsweise eine zentrale Steuereinheit weitergeleitet werden.

Durch die Abstützung der Kontaktierungsmittel auf der der Kontaktierungsrichtung bzw. dem Steckerelement abgewandten Seite an dem Getriebegehäuse können beim Zusammenführen des Steckerelements mit den an der Platine vorhandenen Kontaktierungsmitteln auftretende Steckerkräfte in das Getriebegehäuse abgeführt werden, ohne dass es zu Beschädigungen an der Steckverbindung bzw. an der Platine kommen kann.

Eine Ausführungsform der Erfindung zeichnet sich dadurch aus, dass das Zusammenführen des Steckerelements mit den Kontaktierungsmitteln in einer zur Platine parallelen Kontaktierungsrichtung erfolgt. Dies hat den Vorteil, dass beim Zusammenführen auftretende Steckerkräfte nicht unmittelbar auf die Platine wirken.

Hierbei können die Kontaktierungsmittel insbesondere einen ersten, im wesentlichen senkrecht an der Platine angeordneten Abschnitt und einen zweiten, im wesentlichen senkrecht zum ersten Abschnitt angeordneten und in Kontaktierungsrichtung weisenden Abschnitt aufweisen.

Dabei weist vorteilhafterweise der zweite Abschnitt in Kontaktierungsrichtung weisende Kontaktstifte zur Kontaktierung des Steckerelements auf. Der erste Abschnitt stützt sich vorteilhafterweise an dem Getriebegehäuse derart ab, dass in und/oder entgegen der Kontaktierungsrichtung wirkende Steckerkräfte von dem Getriebegehäuse aufgenommen werden. Vorteilhafterweise kann hierdurch die Platine weitgehend von Steckerkräften freigehalten werden, wodurch entsprechende Beschädigungen an der Platine ausgeschlossen werden.

Um zu verhindern, dass auf der Platine vorhandene Leiterbahnen mit dem Getriebegehäuse, das insbesondere aus einem metallischen Werkstoff sein kann, in Kontakt kommen, kann erfindungsgemäß vorgesehen sein, dass die Platine im Bereich der Aufnahmenuten elektrisch isoliert ausgebildet ist.

Um insbesondere ein Festsetzen der Platine mit dem daran angeordneten Hallsensor unter Vorspannung zu erreichen, kann vorgesehen sein, dass zwischen dem Getriebegehäusedeckel und dem Getriebegehäuse ein elastisches Dichtungselement vorhanden ist. Damit können insbesondere auch Montagespiele sowie Fertigungstoleranzen ausgeglichen werden, wobei gewährleistet wird, dass die Platine funktionssicher in dem Getriebegehäuse gehaltert ist.

Um das Steckerelement auch bei montiertem Getriebegehäusedeckel mit den Kontaktierungsmitteln verbinden zu können, kann erfindungsgemäß vorgesehen sein, dass der Getriebegehäusedeckel im Bereich der Platine bzw. der Kontaktierungsmittel einen Durchbruch aufweist.

Eine weitere Ausführungsform der Erfindung zeichnet sich dadurch aus, dass zwischen der rotierenden Welle und der Platine eine Wand bzw. ein schützender Steg vorhanden ist. Hierdurch kann die Platine und auch der Hallsensor vor der rotierenden Welle geschützt sein. Insbesondere an der Welle vorhandene Schmierstoffe können somit die Funktionsfähigkeit des Hallsensors nicht negativ beeinflussen.

Die eingangs genannte Aufgabe wird außerdem durch eine elektrische Antriebseinheit mit einem Antriebsmotor und einem im Vorhergehenden beschriebenen Getriebe gelöst.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Fig. 1:: die Draufsicht auf einen Ausschnitt eines erfindunsgemäßen Getriebes ohne Getriebegehäusedeckel; und
- Fig.2:: einen Schnitt durch das in Fig. 1 dargestellte Getriebe entlang der Linie II.

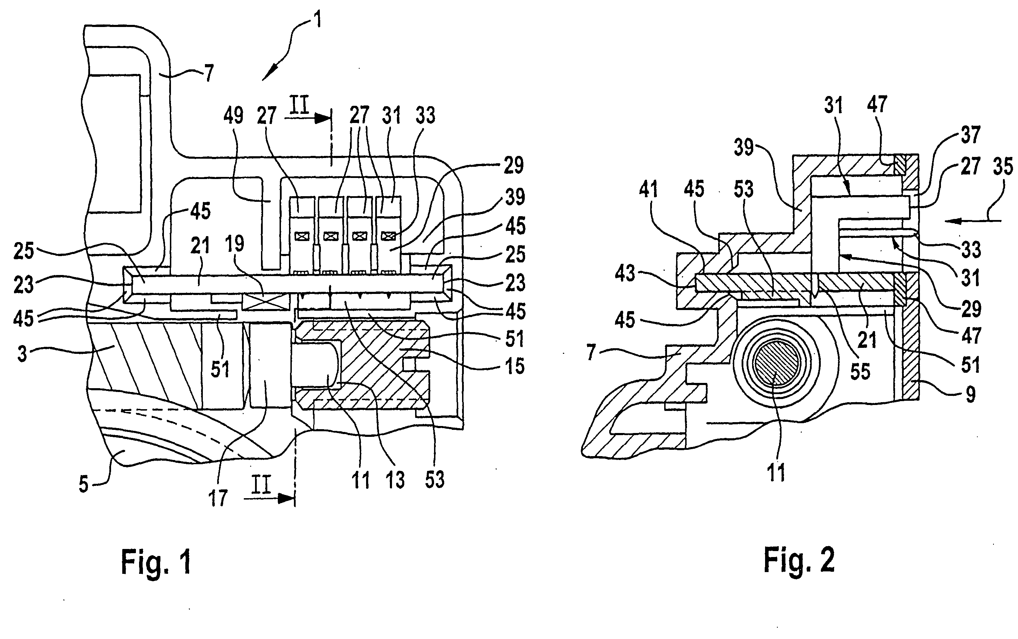

Fig. 1 zeigt den Ausschnitt eines Schneckenradgetriebes 1 mit einer Schneckenwelle 3 und einem Schneckenrad 5. Die Schneckenwelle 3 ist hierbei vorzugsweise als Verlängerung einer Rotorwelle eines nicht dargestellten Elektromotors ausgebildet. Die Schneckenwelle 3 und das Schneckenrad 5 sind in einem Getriebegehäuse 7 angeordnet. Das Gehäuse 7 ist im Wesentlichen wannenförmig und auf der dem Betrachter zugewandten Seite offen. Das Getriebe wird mittels eines in Fig. 2 dargestellten Getriebegehäusedeckels 9 verschlossen.

An dem dargestellten freien Ende der Schneckenwelle 3 geht die Schneckenwelle 3 in einen Endzapfen 11 über. Der Endzapfen 11 wird hierbei von einer Aufnahme 13 einer in das Getriebegehäuse 7 eingeschraubten stiftartigen Lagerschraube 15 aufgenommen.

Auf dem Endzapfen 10 ist ein magnetisches Hohlrad in Form eines Ringmagneten 17 drehfest angeordnet.

Fig. 1 zeigt außerdem im Bereich des Ringmagneten 17 einen Hallsensor 19, der auf einer in das Gehäuse 7 einschiebbaren Platine 21 angeordnet ist. Bei dem in Fig. 1 gezeigten montierten Zustand des Schneckenradgetriebes 1 ist der Hallsensor 19 im Bereich des sich mit der Schneckenwelle 3 mitdrehenden Ringmagnets angeordnet. Damit können von dem rotierenden Ringmagnet 17 ausgehende Magnetimpulse von dem Hallsensor 19 erfasst werden.

Das Gehäuse 7 weist zwei gegenüberliegende Aufnahmenuten 23 zur Aufnahme der Platine 21 bzw. der einander abgewandten Längsseiten 25 der Platine 21 auf. Damit werden die freien Kanten der Längsseiten 25 der Platine 21 von den Aufnahmenuten 23 aufgenommen. Bei der Montage des Schneckenradgetriebes 1 kann die Platine in die Aufnahmenuten 23 eingeschoben werden, wobei die Aufnahmenuten 23 in einer zur Schneckenwelle 3 parallelen Ebene liegen.

Die Platine 21 ist in den Bereichen, in denen sie mit dem Gehäuse 7 bzw. mit den Aufnahmenuten 23 in Kontakt kommt, elektrisch isoliert ausgebildet. Hierdurch wird insbesondere vermieden, dass auf der Platine 21 vorhandene elektrische Leiter mit dem Gehäuse 7 in Kontakt kommen können.

Weiterhin wird aus Fig. 1 und Fig. 2 deutlich, dass an der Platine 21 Kontaktierungsmittel 27 vorhanden sind. Die Kontaktierungsmittel 27 sind zur elektrischen Verbindung des Hallsensors 19 mit einer zentralen Steuereinheit vorgesehen. Dazu wirken die Kontaktierungsmittel 27 mit einem auf die Kontaktierungsmittel 27 aufsteckbaren, nicht dargestellten Steckerelement zusammen.

Die Kontaktierungsmittel 27 weisen Steckkontakte 55 auf, die die Platine 21 durchdringen und mit der Platine 21 verlötet sind. Die Kontaktierungsmittel 27 weisen weiterhin einen ersten, im Wesentlichen senkrecht an der Platine 21 angeordneten Abschnitt 29 auf, an welchem auch die Steckkontakte 53 angeordnet sind. Außerdem weisen die Kontaktierungsmittel 27 einen im Wesentlichen senkrecht zum ersten Abschnitt 29 angeordneten und in Kontaktierungsrichtung weisenden zweiten Abschnitt 31 auf. Der zweite Abschnitt 31 weist Kontaktstifte 33 zur Kontaktierung elektrischer Kontakte des auf den zweiten Abschnitt 31 aufsteckbaren Steckerelements auf.

Wie aus Fig. 2 deutlich hervorgeht, kann ein entsprechendes Steckerelement in Richtung des Pfeiles 35 auf die freien Enden der Kontaktstifte 33 bzw. des zweiten Abschnitts 31 des Kontaktierungsmittels 27 aufgesteckt werden. Um ein Kontaktieren der Kontaktierungsmittel 27, bzw. ein Aufstecken des Steckerelements auch noch nach der Montage des Deckels 9 zu ermöglichen, weist der Deckel 9 einen Durchbruch 37 auf.

Der erste Abschnitt 29 des Kontaktierungsmittels 27 stützt sich, wie in Fig. 2 deutlich zu erkennen ist, an einem Abschnitt 39 des Gehäuses 7 ab. Dabei liegt die dem Abschnitt 39 zugewandte Seite des Kontaktierungsmittels 27 an der Innenseite des Abschnitts 39 an. Vorteilhafterweise wird hierdurch erreicht, dass beim Aufstecken eines Steckerelements auf das Kontaktierungsmittel 27 auftretende Steckkräfte unmittelbar über das Kontaktierungsmittel 27 in das Gehäuse 7 abgeführt werden. Hierdurch wird sowohl eine Entlastung der Platine 21 als auch der Verbindungsstellen des Kontaktierungsmittels 27 mit der Platine 21 erreicht. Beschädigungen bei zu starkem Aufdrücken des Steckerelements auf das Kontaktierungsmittel 27 können demnach nicht auftreten.

Fig. 2 zeigt weiterhin eine dritte Aufnahmenut 41, welche zur Aufnahme der Längsseite 43 der Platine 21 dient. Die einander gegenüberliegenden Aufnahmenuten 23 sowie die Aufnahmenut 43 weisen an den jeweiligen Oberkanten Anfasungen 45 auf, welche ein Einführen der Platine 21 in das Getriebegehäuse 7 vereinfachen.

Wie ebenfalls aus Fig. 2 deutlich zu erkennen ist, ist die Platine 21 mittels des Getriebegehäusedeckels 9 im Getriebegehäuse 7 festgesetzt. Nach dem Einführen der Platine 21 in die Aufnahmenuten 23 und die Aufnahmenut 41 wird der Deckel 29 auf das Getriebegehäuse 7 aufgeschraubt. Dabei drückt eine zwischen dem Deckel 9 und dem Getriebegehäuse 7 vorhandene elastisch ausgebildete Dichtung 47 die Platine 21 unter Vorspannung in das Getriebegehäuse 7. Hierdurch wird die dem Getriebegehäusedeckel 9 abgewandte Längsseite 43 der Platine 21 gegen den Nutgrund der Aufnahmenut 41 gedrückt. Die Platine 21 wird somit dauerhaft funktionssicher gehaltert.

Das Getriebegehäuse 7 weist außerdem einen die Kontaktierungsmittel 27 schützenden Wandabschnitt 49 auf. Weiterhin sind verschiedene Stege 51 vorgesehen, die zwischen der rotierenden Ankerwelle 3 und der Platine 21 vorhanden sind.

Zwischen der Platine 21 und dem Steg 51 ist an der Platine 21 ein Abstandshalter 53 angeformt, der zur Positionierung der Platine 21 in dem Getriebegehäuse 7 vorgesehen ist.

Das in den Fig. 1 und 2 gezeigte Schneckenradgetriebe hat insbesondere den Vorteil, dass der Einbau der den Hallsensor 19 tragenden Platine 21 entlang einer Montagerichtung auf sehr einfache Art und Weise möglich ist. Zur Halterung der den Hallsensor 19 tragenden Platine 21 sind zudem keine zusätzlichen Befestigungs- oder Verschlussteile erforderlich. Die Halterung der Platine 21 erfolgt ausschließlich über die entsprechenden Aufnahmenuten 23 und 41 sowie über den Gehäusedeckel 9. Außerdem kann eine Beschädigung der Platine 21 aufgrund der Abstützung der Kontaktierungsmittel 27 an dem Gehäuseabschnitt 39 beim Aufstecken eines Steckerelements auf die Kontaktierungsmittel 27 nicht erfolgen.

## Patentansprüche

1. Getriebe (1), insbesondere Schneckenradgetriebe, mit einer Antriebswelle (3), mit einer Abtriebswelle (5), mit einem Getriebegehäuse (7), mit einem auf der Antriebswelle (3) angeordneten magnetischen Polrad (17), mit einem sich am Getriebegehäuse (7) abstützenden, im Bereich des Polrades (17) angeordneten Hallsensor (19) zur Erfassung der Drehbewegung des Polrades (17) bzw. der Antriebswelle (3) und mit einem das Getriebegehäuse (7) verschließenden Getriebegehäusedeckel (9), wobei das Getriebegehäuse (7) Aufnahmenuten (23) zur Aufnahme einer Platine (21) bzw. zur Aufnahme der freien Längsseiten (25) einer Platine (21) aufweist, welche in einer zur Rotationsachse der Antriebswelle (3) parallelen Ebene liegen, wobei der Hallsensor (19) auf der in die Aufnahmenuten (23) einschiebbaren Platine (21) angeordnet und die Platine (21) mittels des Getriebegehäusedeckels (9) im Getriebegehäuse (7) festgesetzt ist, **dadurch gekennzeichnet, dass** an der Platine (21) Kontaktierungsmittel (27) zum Zusammenwirken mit einem Steckerelement vorhanden sind und dass die Kontaktierungsmittel (27) auf der der Kontaktierungsrichtung (35) bzw. dem Steckerelement abgewandten Seite an dem Getriebegehäuse (7, 39) abgestützt sind.

2. Getriebe (1) nach Anspruch 1, **dadurch gekennzeichnet, dass** das Zusammenführen des Steckerelements mit den Kontaktierungsmitteln (27) in einer zur Platine (21) parallelen Kontaktierungsrichtung (35) erfolgt.

3. Getriebe (1) nach einem der vorhergehenden Ansprüche, **dadurch gekennzeichnet, dass** die Kontaktierungsmittel (27) einen ersten, im Wesentlichen senkrecht an der Platine (21) angeordneten Abschnitt (29) und einen zweiten, im Wesentlichen senkrecht zum ersten Abschnitt (29) angeordneten und in Kontaktierungsrichtung (35) weisenden Abschnitt (31) aufweisen.

4. Getriebe (1) nach Anspruch 3, **dadurch gekennzeichnet, dass** der zweite Abschnitt (31) in Kontaktierungsrichtung (35) weisende Kontaktstifte (33) zur Kontaktierung des Steckerelements aufweist.

5. Getriebe (1) nach Anspruch 3 oder 4, **dadurch gekennzeichnet, dass** sich der erste Abschnitt (39) an dem Getriebegehäuse (7, 39) derart abstützt, dass in und/oder entgegen der Kontaktierungsrichtung (35) wirkende Steckerkräfte von dem Getriebegehäuse (7, 39) aufgenommen werden.

6. Getriebe (1) nach Anspruch 1, **dadurch gekennzeichnet, dass** die Platine (21) im Bereich der Aufnahmenuten (23, 41) elektrisch isoliert ausgebildet ist.

7. Getriebe (1) nach einem der vorhergehenden Ansprüche, **dadurch gekennzeichnet, dass** zwischen dem Getriebegehäusedeckel (9) und dem Getriebegehäuse (7) ein elastisches Dichtungselement (47) vorhanden ist.

8. Getriebe (1) nach Anspruch 7, **dadurch gekennzeichnet, dass** das elastische Dichtungselement (47) die Platine (21) unter Vorspannung in das Getriebegehäuse (7) drückt.

9. Getriebe (1) nach einem der vorhergehenden Ansprüche, **dadurch gekennzeichnet, dass** der Getriebegehäusedeckel (9) im Bereich der Platine (21) bzw. der Kontaktierungsmittel (27) einen Durchbruch (37) aufweist.

10. Getriebe (1) nach einem der vorhergehenden Ansprüche, **dadurch gekennzeichnet, dass** zwischen der rotierenden Welle (3) und der Platine (21) eine Wand (49) bzw. ein schützender Steg (51) vorhanden ist.

11. Elektrische Antriebseinheit mit einem Antriebsmotor und einem Getriebe (1) nach wenigstens einem der vorhergehenden Ansprüche.

## Claims

1. Gear (1), in particular a worm gear, having a drive shaft (3), an output shaft (5), a gear housing (7), a magnetic pole wheel (17) arranged on the drive shaft (3), a Hall-effect sensor (19) supported on the gear housing (7) and arranged in the region of the pole wheel (17) for detecting the rotational movement of the pole wheel (17) and/or of the drive shaft (3), and a gear housing cover (9) which closes the gear housing (7), wherein the gear housing (7) has receiving grooves (23) for receiving a circuit board (21) or for receiving the free longitudinal sides (25) of a circuit board (21), which receiving grooves lie in a plane parallel to the axis of rotation of the drive shaft (3), wherein the Hall-effect sensor (19) is arranged on the circuit board (21) which can be inserted into the receiving grooves (23) and the circuit board (21) is fixed in the gear housing (7) by means of the gear housing cover (9), **characterized in that** on the circuit board (21) there are contact means (27) for cooperating with a plug element and **in that** the contact means (27) are supported on the gear housing (7, 39) on the side facing away from the contact direction (35) or the plug element.

2. Gear (1) according to Claim 1, **characterized in that** the connection of the plug element to the contact means (27) takes place in a contact direction (35) parallel to the circuit board (21).

3. Gear (1) according to one of the preceding claims, **characterized in that** the contact means (27) have a first section (29) which is arranged essentially perpendicular to the circuit board (21) and a second section (31) which is arranged essentially perpendicular to the first section (29) and points in the contact direction (35).

4. Gear (1) according to Claim 3, **characterized in that** the second section (31) has contact pins (33) pointing in the contact direction (35) for making contact with the plug element.

5. Gear (1) according to Claim 3 or 4, **characterized in that** the first section (29) is supported on the gear housing (7, 39) in such a way that plug forces acting in and/or counter to the contact direction (35) are absorbed by the gear housing (7, 39).

6. Gear (1) according to Claim 1, **characterized in that** the circuit board (21) is designed to be electrically insulated in the region of the receiving grooves (23, 41).

7. Gear (1) according to one of the preceding claims, **characterized in that** there is an elastic sealing element (47) between the gear housing cover (9) and the gear housing (7).

8. Gear (1) according to Claim 7, **characterized in that** the elastic sealing element (47) presses the circuit board (21) under prestress into the gear housing (7).

9. Gear (1) according to one of the preceding claims, **characterized in that** the gear housing cover (9) has an opening (37) in the region of the circuit board (21) or the contact means (27).

10. Gear (1) according to one of the preceding claims, **characterized in that** there is a wall (49) or a protective web (51) between the rotating shaft (3) and the circuit board (21).

11. Electric drive unit comprising a drive motor and a gear (1) according to at least one of the preceding claims.

## Revendications

1. Engrenage (1), en particulier engrenage à vis sans fin, comportant un arbre menant (3), un arbre mené (5), un carter d'engrenages (7), une roue polaire (17) magnétique, disposée sur l'arbre menant (3), un capteur à effet Hall (19) reposant sur le carter d'engrenages (7), disposé dans la zone de la roue polaire (17), permettant d'enregistrer le mouvement de rotation de la roue polaire (17) ou de l'arbre menant (3), et un couvercle du carter d'engrenages (9) fermant le carter d'engrenages (7), moyennant quoi le carter d'engrenages (7) comporte des rainures de réception (23) permettant de recevoir une carte de circuit imprimé (21) ou de recevoir les côtés longitudinaux libres (25) d'une carte de circuit imprimé (21), lesquelles se trouvent dans un plan parallèle à l'axe de rotation de l'arbre menant (3), moyennant quoi le capteur à effet Hall (19) est disposé sur la carte de circuit imprimé (21) pouvant être introduite dans les rainures de réception (23), et la carte de circuit imprimée (21) est fixée dans le carter d'engrenages (7) à l'aide du couvercle du carter d'engrenages (9),
**caractérisé en ce que** des moyens de contact électrique (27) sont présents sur la carte de circuit imprimé (21) pour agir conjointement avec un élément de connecteur, et **en ce que** les moyens de contact électrique (27) reposent sur le carter d'engrenages (7, 39), du côté opposé au sens de contact (35) ou à l'élément de connecteur.

2. Engrenage (1) selon la revendication 1, **caractérisé en ce que** le rassemblement de l'élément de connecteur avec les moyens de contact électrique (27) est effectué dans un sens de contact (35) parallèle à la carte de circuit imprimé (21).

3. Engrenage (1) selon l'une quelconque des revendications précédentes, **caractérisé en ce que** les moyens de contact électrique (27) comportent un premier tronçon (29), disposé de manière sensiblement perpendiculaire sur la carte de circuit imprimé (21), et un deuxième tronçon (31), disposé de manière sensiblement perpendiculaire par rapport au premier tronçon (29), et orienté dans le sens du contact (35).

4. Engrenage (1) selon la revendication 3, **caractérisé en ce que** le deuxième tronçon (31) comporte des broches de contact (33) orientées dans le sens du contact (35), permettant de mettre en contact l'élément de connecteur.

5. Engrenage (1) selon l'une quelconque des revendications 3 ou 4, **caractérisé en ce que** le premier tronçon (39) repose sur le carter d'engrenages (7, 39) de telle sorte que les forces de connexion s'exerçant dans le sens de contact (35) et / ou dans le sens opposé à de celui-ci, sont absorbées par le carter d'engrenages (7, 39).

6. Engrenage (1) selon la revendication 1, **caractérisé en ce que** la carte de circuit imprimé (21) est configurée en étant isolée d'un point de vue électrique, dans la zone des rainures de réception (23, 41).

7. Engrenage (1) selon l'une quelconque des revendications précédentes, **caractérisé en ce que**, entre le couvercle du carter d'engrenages (9) et le carter d'engrenages (7) se trouve un élément d'étanchéité (47) élastique.

8. Engrenage (1) selon la revendication 7, **caractérisé en ce que** l'élément d'étanchéité (47) élastique enfonce la carte de circuit imprimé (21) par précontrainte dans le carter d'engrenages (7).

9. Engrenage (1) selon l'une quelconque des revendications précédentes, **caractérisé en ce que** le couvercle du carter d'engrenages (9) comporte un ajour (37) dans la zone de la carte de circuit imprimé (21) ou des moyens de contact électrique (27).

10. Engrenage (1) selon l'une quelconque des revendications précédentes, **caractérisé en ce que**, entre l'arbre rotatif (3) et la carte de circuit imprimé (21), il est prévu une paroi (49) ou une barre de protection (51).

11. Unité d'entraînement électrique comportant un moteur d'entraînement et un engrenage (1) selon au moins l'une quelconque des revendications précédentes.
